# EUROPEAN PATENT SPECIFICATION

(11) **EP 4 363 644 B1**
(45) Date of publication and mention of the grant of the patent: **03.12.2025**
(21) Application number: 22741131.1
(22) Date of filing: 08.06.2022
(51) Int. Cl.: D04H 1/4274, D04H 1/4342, D04H 1/435

(54) **NONWOVEN LINER FOR CURED-IN-PLACE PIPES**
VLIESSTOFFAUSKLEIDUNG FÜR IN-SITU AUSGEHÄRTETE ROHRE
REVÊTEMENT NON TISSÉ POUR TUYAUX DURCIS EN PLACE

(30) Priority: 30.06.2021 US 202163216843 P
(43) Date of publication of application: 08.05.2024
(73) Proprietor: DuPont Safety & Construction, Inc., Wilmington, DE 19805 (US)
(72) Inventor: ROCHETTE, France, Mississauga, Ontario L5N7K2 (CA); SAHBAEE, Arash, Richmond, Virginia 23234 (US)
(74) Representative: Abitz & Partner
(86) International application number: PCT/US2022/072810
(87) International publication number: WO 2023/278929

(56) References cited:
- EP-A1- 3 699 474
- EP-B1- 0 148 033
- US-A- 4 040 371
- US-A1- 2004 242 108

## Description

Field of the Invention. This invention relates to nonwoven felts for use with cured-in-place pipes (CIPP) wherein the nonwoven felts include re-purposed staple fibers to utilize what would normally be waste fibers that are thrown away.

A cured-in-place pipe is a trenchless rehabilitation method used to repair existing pipelines. It is a pipe lining within an existing pipe. As one of the most widely used rehabilitation methods, CIPP has applications in sewer, water, gas, and chemical pipelines ranging in diameter from 0.1 to 3.0 meters (2-120 inches). The process of CIPP involves inserting and running a fabric lining into a preexisting pipe that is the subject of repair. Resin within the liner is then exposed to a curing element to make it attach to the inner walls of the pipe. Once fully cured, the lining now acts as a new pipeline. The mechanical requirements for the lining are different, depending on whether the piping operates due to gravity or is under higher pressures.

Description of Related Art. European Patent Publication 3 699 474 A1 to Rosemont (hereinafter "Rosemont") discloses a method of repairing and/or reinforcing a pipe segment that includes a tubular substrate. The publication states the tubular substrate can be prepared from a flat substrate made from a mixture of carbon, aramid and thermoplastic fibers that are needle punched together to form a flat substrate. The carbon fibers are preferably recycled or reclaimed fibers.

It is well known that carbon fibers are both very costly and have a very high tensile modulus; that means from a practical point-of-view they are very stiff fibers. As disclosed in Rosemont, installation of the tubular substrate during the CIPP process involves inverting the tubular substrate tube into an existing pipe and then using the inverted tubular substrate as a bladder that is then filled with a fluid such as water or air to expand and position the tubular substrate in place against the walls of the existing pipe. Therefore, while the high modulus carbon fibers may be desirable once in place in the pipe, they make the tubular structure less flexible during installation. A less-costly material that also has a lower but still adequate modulus and is therefore more flexible is desirable.

### Brief Summary of the Invention

This invention relates to pipe liner comprising a nonwoven felt, the nonwoven felt consisting essentially of 0 to 85 weight percent polyester staple fibers and 15 to 100 weight percent para-aramid staple fibers, based on the total amount of polyester staple fibers and para-aramid staple fibers in the nonwoven felt; the nonwoven felt having a basis weight of 250 to 600 grams per square meter; and a thickness of 2.0 to 5.0 mm; wherein:
i) 20 to 100 weight percent of the total amount of para-aramid staple fibers are re-purposed para-aramid staple fibers,
ii) 0 to 80 weight percent of the total amount of para-aramid staple fibers are crimped virgin para-aramid staple fibers having a uniform cut length, and
iii) at least 50 weight percent of the total amount of the combined polyester and para-aramid staple fibers are crimped staple fibers.

This invention further relates to a process for making a nonwoven felt suitable for use in a pipe liner, the process comprising the steps of:
a) forming a supply of staple fibers consisting essentially of 0 to 85 weight percent polyester staple fibers and 15 to 100 weight percent para-aramid staple fibers, based on the total amount of polyester staple fibers and para-aramid staple fibers,
   wherein:
   i) 20 to 100 weight percent of the total amount of para-aramid staple fibers are re-purposed para-aramid staple fibers,
   ii) 0 to 80 weight percent of the total amount of para-aramid staple fibers are crimped virgin para-aramid staple fibers having a uniform cut length, and
   iii) at least 50 weight percent of the total amount of the combined polyester and para-aramid staple fibers are crimped staple fibers;
b) converting the supply of staple fibers into a web of staple fibers;
c) lapping the web of staple fibers to make a batt of staple fibers; and
b) felting the batt of staple fibers to make a felt having a basis weight of 250 to 600 grams per square meter and a thickness of 2.0 to 5.0 mm.

### Detailed Description of the Invention

This invention relates to a pipe liner comprising a nonwoven felt comprising a blend of polyester and para-aramid staple fibers, wherein 20 to 100 weight percent of the total amount of para-aramid staple fibers are re-purposed para-aramid staple fibers; in some embodiments, at least some percentage of said re-purposed para-aramid staple fibers have a variable cut length. Preferably the nonwoven felt is a needle-punched felt.

The term "staple fibers" as used herein refer to fibers made by cutting filaments into lengths of no more than about 15 cm (5.9 inches), preferably 3 to 15 cm (1.2 to 5.9 inches); and most preferably 3 to 8 cm (1.2 to 3.1 inches). The staple fiber can be straight (i.e., non-crimped) or crimped to have a saw tooth shaped crimp along its length, with any crimp (or repeating bend) frequency.

As used herein, the term "re-purposed" para-aramid staple fibers mean para-aramid staple fibers that are derived from filament feedstock that is normally considered and treated as waste; these "re-purposed" para-aramid staple fibers have as their source at least one of the following categories that generate para-aramid filament and para-aramid fibrous waste:
i) spinning machine filament waste, which are filaments that have been spun but are never packaged for first-grade sale and that were considered and treated as waste; these filaments include the filament waste created during spinning machine startup and shutdown, and general spinning machine waste that occurs during spinning machine upsets;
ii) filaments that have been spun and wound into packages but that have defects and are considered and treated as waste; these filaments include filaments having unacceptable uniformity, such as denier or color variations; filaments having mechanical or structural defects, and filaments having unacceptable amounts of spin finish or lacking spin finish, making them generally unsuitable for subsequent normal processing;
iii) bobbin tails, which are the filaments remaining on a bobbin after a specific length of yarn has been used from a bobbin, and which are not of sufficient length that they must be disposed of as waste;
iv) fibrous material generated from the deconstructing of woven or knit fabrics in a fabric recycling process; and
v) fibrous material recovered from recycled tires and other recycled materials.

Depending on the source, the "re-purposed" para-aramid staple fibers may or may not have crimp and may or may not be precisely cut. For example, filaments that have been spun and wound into packages but that have defects and are considered and treated as waste, and bobbin tails, may be of sufficient quality that they can be crimped and precisely cut.

Specifically, the nonwoven felt containing the re-purposed para-aramid staple fibers consists essentially of 0 to 85 weight percent polyester staple fibers and 15 to 100 weight percent para-aramid staple fibers, based on the total amount of polyester staple fibers and para-aramid staple fibers in the nonwoven felt. The nonwoven felt further has a basis weight of 250 to 600 grams per square meter; and a thickness of 2.0 to 5.0 mm. Additionally, in the nonwoven felt:
i) 20 to 100 weight percent of the total amount of para-aramid staple fibers are re-purposed para-aramid staple fibers,
ii) 0 to 80 weight percent of the total amount of para-aramid staple fibers are crimped virgin para-aramid staple fibers having a uniform cut length, and
iii) at least 50 weight percent of the total amount of the combined polyester and para-aramid staple fibers are crimped staple fibers.

The pipe liner comprises nonwoven felt. By nonwoven felt, what is meant is the conventional felt structure achieved by consolidating a batt of staple fibers, typically via either needle punching or hydrolacing. Needle punching processes such as disclosed in U.S. Pat. Nos. 2,910,763 and 3,684,284, and hydrolacing or spunlacing processes such as disclosed in U.S. Pat. No. 4,556,601 to Kirayoglu describe processes known in the art for the manufacture of the nonwoven felts.

The nonwoven felt consists essentially of, or consists of, 0 to 85 weight percent polyester staple fibers and 15 to 100 weight percent para-aramid staple fibers, based on the total amount of polyester staple fibers and para-aramid staple fibers in the nonwoven felt. In some embodiments, the nonwoven felt consists essentially of, or consists of, 0 to 70 weight percent polyester staple fibers and 30 to 100 weight percent para-aramid staple fibers, based on the total amount of polyester staple fibers and para-aramid staple fibers in the nonwoven felt. In some other embodiments, the nonwoven felt consists essentially of, or consists of, 50 to 70 weight percent polyester staple fibers and 30 to 50 weight percent para-aramid staple fibers, based on the total amount of polyester staple fibers and para-aramid staple fibers in the nonwoven felt. As used herein, "consists essentially of" is intended to mean the blend of fibers could additionally obtain up to about 5 percent of additional material or fibers that do not appreciably affect the performance of the nonwoven felt.

The para-aramid staple fibers provide the nonwoven felt with high flexural strength, high flexural modulus, and high tensile strength that enable the pipe liner to maintain its mechanical properties through the installation. Since the installation requires the pipe liner to be reversed upon itself in the damaged pipe under high pressure conditions, which can include in the case of a small diameter pipe a very sharp reversal radius, the ductility and flexibility of the nonwoven felt enables it to maintain its integrity and mechanical properties versus felts made with glass or carbon fibers. Glass or carbon fibers have a higher modulus than para-aramid staple fibers, meaning in a practical sense that they are stiffer fibers; they further are more brittle and can break in this process, causing a decrease in the expected performance of the installed pipe liner made from the nonwoven felt containing such fibers. In addition, the improved high flexural strength, high flexural modulus, and high tensile strength provided by the use of para-aramid staple fibers in the nonwoven felt allows the pipe liner to meet performance expectations while also being thinner. A thinner pipe liner further uses less resin, which cures faster; and the installed pipe inside diameter is greater, enabling greater flow through the repaired pipe. Felts consisting essentially of only para-aramid staples fibers are useful in repairs dealing with pipes operating at higher pressure, where the pipe liner needs a higher burst strength and where a reduction in the pipe liner thickness can have an even greater impact on resin usage and cure time.

The nonwoven felt needs at least 15 weight percent para-aramid staple fiber for the higher modulus properties of the para-aramid staple fiber to be reflected in the properties of the nonwoven felt. Nonwoven felts having a higher para-aramid fiber content, such as greater than 80 weight percent up to and including 100 weight percent para-aramid staple fiber, can have use in pipe liners that operate under high pressure. However, for many applications, such as for pipe liners that operate under gravity, a para-aramid staple fiber content of 15 to 50 weight percent in the nonwoven felt is useful, and in some other pipe liners a para-aramid staple fiber content of 30 to 50 weight percent in the nonwoven felt is desirable.

The polyester staple fibers generally are crimped staple fibers and are used as a resin-compatible carrier for the para-aramid staple fibers, and also allow the tailoring of the desired thickness and mechanical properties of the nonwoven felt. Para-aramid staple fibers are generally more expensive than polyester staple fibers, so therefore it is desirable that the nonwoven felt have as much polyester staple fibers as possible, while still achieving the desired mechanical performance. Generally, up to 70 weight percent polyester staple fibers are combined with the para-aramid staple fibers, although as previously mentioned a nonwoven felt having exclusively para-aramid staple fibers has use in some pipe applications.

20 to 100 weight percent of the total amount of para-aramid staple fibers in the nonwoven felt are re-purposed para-aramid staple fibers as defined herein. The use of re-purposed para-aramid staple fibers provides several benefits. For example, the use of these fibers avoids disposing these fibers as waste, which lessens the amount of fibers sent to landfills, which is beneficial to the environment. An additional benefit is that the use of these fibers helps reduce the overall cost of the felt. Another benefit is that the requirements for the pipe liner application and the production of nonwoven felts for that application are suited for the use of such re-purposed para-aramid staple fibers.

In some embodiments, 25 to 100 weight percent of the total amount of para-aramid staple fibers in the nonwoven felt are re-purposed para-aramid staple fibers. In some other embodiments, at least 30 weight percent of the total amount of para-aramid staple fibers in the nonwoven felt are re-purposed para-aramid staple fibers. In some other embodiments, the total amount of para-aramid staple fibers in the nonwoven felt that are re-purposed para-aramid staple fibers is 70 weight percent or less.

In some embodiments, at least some percentage of the re-purposed para-aramid staple fibers have a variable cut length. Due to the wide variety of waste filament sources, all of the filament feedstock used for the re-purposed para-aramid staple fibers may not be able to be crimped and cut via normal staple cutting processes. For example, filaments that have been spun and wound into packages but that have defects and bobbin tails can generally be cut into staple using conventional crimping/cutting processes, provided para-aramid filaments that are crimped with a uniform cut length. However, spinning machine filament waste and fibers generated from the deconstructing of fabrics are generally collected as a mass of filaments, making them unsuitable for conventional crimping/cutting processes. These filaments can instead be cut into staple using a guillotine or other type of chopping operation; however, the staple is not crimped and the cut length is not tightly controlled, providing a para-aramid staple with a variable cut length. In some embodiments, at least 20 weight percent of the re-purposed para-aramid staple fibers have a variable cut length; in some embodiments amount of the re-purposed para-aramid staple fibers having a variable cut length is 60 weight percent or less.

Therefore, the re-purposed para-aramid staple fibers can include variable cut length re-purposed para-aramid staple fibers and precise cut-length re-purposed para-aramid staple fibers. In some embodiments, the variable cut length re-purposed para-aramid staple fibers do not have crimp and the precise cut-length re-purposed para-aramid staple fibers do have crimp.

While it is advantageous to use re-purposed para-aramid staple fibers in the nonwoven felt, there may be instances wherein it may be desirable to additionally use para-aramid staple fibers that are not re-purposed para-aramid staple fibers in the nonwoven felt for improved uniformity. That is, since re-purposed para-aramid staple fibers are generated from filament feedstock that is normally considered and treated as waste, the variability of the re-purposed para-aramid staple fibers will be higher than para-aramid staple fibers made from commercially salable para-aramid filaments.

Therefore, 0 to 80 weight percent of the total amount of para-aramid staple fibers in the nonwoven felt are crimped virgin para-aramid staple fibers having a uniform cut length. In some embodiments, 0 to 75 weight percent of the total amount of para-aramid staple fibers in the nonwoven felt are crimped virgin para-aramid staple fibers having a uniform cut length.

As used herein, the phrase "crimped virgin para-aramid staple fibers having a uniform cut length" means para-aramid staple fibers specifically made, crimped, cut, and commercially sold in bales to be used as para-aramid staple fibers in traditional textile applications (yarns, fabrics, and nonwovens, etc.) and are not re-purposed para-aramid staple fibers. In some embodiments, the para-aramid staple fibers in the felt consists of re-purposed para-aramid staple fibers and crimped virgin para-aramid staple fibers.

If it is desirable for both the polyester staple fibers and the para-aramid staple fibers to be present in the nonwoven felt, preferably the nonwoven felt is made from an intimate staple fiber blend of the polyester staple fibers and the para-aramid staple fibers, meaning that the polyester staple fibers and para-aramid staple fibers are uniformly mixed together. Further, if both the polyester staple fibers and the para-aramid staple fibers are present, preferably the polyester staple fibers and para-aramid staple fibers are also disposed in the nonwoven felt as an intimate blend, meaning that the polyester staple fibers and para-aramid staple fibers are uniformly mixed and distributed in the felt. The uniform mixture in the felt avoids any localized areas having a high concentration of any one type of fiber in any one portion of the felt. Preferably, all of the polyester staple fibers have a uniform cut length and uniform crimp.

Additionally, at least 50 weight percent of the total amount of the combined polyester staple fibers and para-aramid staple fibers in the nonwoven felt are crimped staple fibers. It is believed that a supply of staple fibers having less than 50 weight percent crimped staple fiber will have issues in carding and other processing issues, making the generation of nonwoven felts difficult. In some embodiments, at least 60 weight percent of the total amount of the combined polyester staple fibers and para-aramid staple fibers in the nonwoven felt are crimped staple fibers. In some other embodiments, the total amount of the combined polyester staple fibers and para-aramid staple fibers in the nonwoven felt that are crimped staple fibers is 75 weight percent or less.

In some preferred embodiments, both the polyester and the para-aramid staple fibers that have crimp have a crimp frequency of 2.5 to 5.5 crimps per centimeter (7 to 14 crimps per inch). In some preferred embodiments in the nonwoven felt, both the polyester staple fibers and para-aramid staple fibers, including both uniform and variable cut length, have a cut length that is minimally 1.0 centimeters (0.4 inches). In some preferred embodiments in the nonwoven felt, both the polyester staple fibers and para-aramid staple fibers, including both uniform and variable cut length, have a cut length that is maximally 10.1 centimeters (4.0 inches). As used herein, "uniform cut length" and "precise cut length" are intended to have the same meaning and be interchangeable. The staple fibers that have a uniform cut length are preferably cut to a length of 3.8 to 10.1 centimeters (1.5 to 4.0 inches). In still some other embodiments, the nonwoven felt consists of 60 to 40 weight percent of para-aramid staple fibers having a uniform or precise cut length and 40 to 60 weight percent of para-aramid staple fibers having a variable cut length, based on the total amount of the combined para-aramid staple fibers in the nonwoven felt.

The nonwoven felt has a basis weight of 250 to 600 grams per square meter and in some embodiments the nonwoven felt has a basis weight of at least 300 grams per square meter. In other embodiments the nonwoven felt has a basis weight of 500 grams per square meter or less.

The nonwoven felt additionally has a thickness of 2.0 to 5.0 mm; and in some embodiments the nonwoven felt has a thickness of at least 2.5 mm. In other embodiments the nonwoven felt has a thickness of 4.0 mm or less.

The basis weight and thickness of the nonwoven felt are important because the nonwoven felt described herein can provide a single-layer pipe liner, meaning that the pipe liner is made from a single layer of the nonwoven felt, and this is a preferred embodiment. A single-layer pipe liner is preferred because the thickness of the pipe liner determines the amount of resin used when re-lining the pipe and the repaired pipe's inner diameter as previously explained herein. Therefore, use of a single-layer pipe liner is preferred in many applications due to its significant cost impact on the refurbishing or the pipe and the ultimate operation of the pipe.

However, if desired, the pipe liner can comprise multiple layers of the nonwoven felt consisting of the polyester staple fibers and para-aramid staple fibers described herein. Alternatively, the pipe liner can include one or more layers of the nonwoven felt consisting of the polyester staple fibers and para-aramid staple fibers described herein layered with one or more layers of one or more felts that do not have re-purposed para-aramid staple fibers.

Pipes comprising the pipe liner described herein are preferably cure-in-place-pipes comprising the pipe liner described herein made from at least one layer of a para-aramid containing nonwoven felt, in single-layer or multi-layer arrangements. Specifically, this invention further relates to a cured-in-place pipe comprising the pipe liner described herein. In some embodiments, only a single-layer of the pipe liner is present in the cured-in-place pipe. In some other embodiments, multiple layers of the pipe liner are present in the cured-in-place pipe. In some other embodiments, the cured-in-place pipe includes one or more layers of the pipe liner described herein layered with one or more layers of one or more felts that do not have re-purposed para-aramid staple fibers.

In some embodiments, polyester staple fiber refers to staple fiber made from filaments of any type of synthetic polymer or copolymer composed of at least 85% by weight of an ester of dihydric alcohol and terephthalic acid. The polymer can be produced by the reaction of ethylene glycol and terephthalic acid or its derivatives. In some embodiments the preferred polyester is polyethylene terephthalate (PET). Polyester formulations may include a variety of comonomers, including diethylene glycol, cyclohexanedimethanol, poly(ethylene glycol), glutaric acid, azelaic acid, sebacic acid, isophthalic acid, and the like. In addition to these comonomers, branching agents like trimesic acid, pyromellitic acid, trimethylolpropane and trimethyloloethane, and pentaerythritol may be used. PET may be obtained by known polymerization techniques from either terephthalic acid or its lower alkyl esters (e.g. dimethyl terephthalate) and ethylene glycol or blends or mixtures of these. Useful polyesters can also include polyethylene napthalate (PEN). PEN may be obtained by known polymerization techniques from 2,6 napthalene dicarboxylic acid and ethylene glycol.

In a preferred embodiment, polyester filaments are obtained by melt spinning. In melt spinning, the polyester polymer is melted and pumped through a spinneret or die having a plurality of holes to form a plurality of molten filaments. The molten filaments are then cooled and optionally drawn to form solidified filaments.

In some embodiments, para-aramid staple fiber refers to staple fiber made from filaments of an aramid polymer wherein the two rings or radicals are para oriented with respect to each other along the molecular chain. Methods for making para-aramid staple fibers are generally disclosed in, for example, US Patent Nos. 3,869,430; 3,869,429; and 3,767,756. Poly (p-phenylene terephthalamide) (PPD-T) is the preferred para-aramid polymer and preferred para-aramid staple fiber. By PPD-T is meant the homopolymer resulting from mole-for-mole polymerization of p-phenylene diamine and terephthaloyl chloride and, also, copolymers resulting from incorporation of small amounts of other diamines with the p-phenylene diamine and of small amounts of other diacid chlorides with the terephthaloyl chloride. As a general rule, other diamines and other diacid chlorides can be used in amounts up to as much as about 10 mole percent of the p-phenylene diamine or the terephthaloyl chloride, or perhaps slightly higher, provided only that the other diamines and diacid chlorides have no reactive groups which interfere with the polymerization reaction. PPD-T, also, means copolymers resulting from incorporation of other aromatic diamines and other aromatic diacid chlorides such as, for example, 2,6-naphthaloyl chloride or chloro- or dichloroterephthaloyl chloride; provided, only that the other aromatic diamines and aromatic diacid chlorides be present in amounts which do not adversely affect the properties of the para-aramid.

Additives can be used with the para-aramid in the fibers and it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid.

Para-aramid filaments are generally spun by extrusion of a solution of the para-aramid through a capillary into a coagulating bath. In the case of poly (p-phenylene terephthalamide), the solvent for the solution is generally concentrated sulfuric acid and the extrusion is generally through an air gap into a cold, aqueous, coagulating bath. Such processes are well known and are generally disclosed in U.S. Pat. Nos. 3,063,966; 3,767,756; 3,869,429, & 3,869,430. The para-aramid filaments can then be cut and crimped using conventional techniques to make para-aramid staple fibers.

This invention further relates to a process for making a pipe liner comprising a nonwoven felt comprising a blend of polyester and para-aramid staple fibers, wherein 20 to 100 weight percent of the total amount of para-aramid staple fibers are re-purposed para-aramid staple fibers, and in some embodiments at least some percentage of said re-purposed para-aramid staple fibers have a variable cut length.

Specifically, this invention further relates to a process for making a nonwoven felt suitable for use in a pipe liner, the process comprising the steps of:
a) forming a supply of staple fibers consisting essentially of 0 to 85 weight percent polyester staple fibers and 15 to 100 weight percent para-aramid staple fibers, based on the total amount of polyester staple fibers and para-aramid staple fibers,
   wherein:
   i) 20 to 100 weight percent of the total amount of para-aramid staple fibers are re-purposed para-aramid staple fibers,
   ii) 0 to 80 weight percent of the total amount of para-aramid staple fibers are crimped virgin para-aramid staple fibers having a uniform cut length, and
   iii) at least 50 weight percent of the total amount of the combined polyester and para-aramid staple fibers are crimped staple fibers;
b) converting the supply of staple fibers into a web of staple fibers;
c) lapping the web of staple fibers to make a batt of staple fibers; and
b) felting the batt of staple fibers to make a felt having a basis weight of 250 to 600 grams per square meter and a thickness of 2.0 to 5.0 mm.

It is understood and intended that all the descriptors and ranges previously provided herein, and all the possible embodiments for the polyester staple fibers and the para-aramid staple fibers, including but not limited to the re-purposed para-aramid staple fibers, the crimped virgin para-aramid staple fibers, and the total amount of crimped staple fibers previously described equally apply to the process for making the nonwoven felt suitable for use in a pipe liner. Further, all features previously described herein for the nonwoven felt are intended to also apply to the process for making the nonwoven felt suitable for use in a pipe liner.

The supply of staple fibers consists essentially of, or consists of, 0 to 85 weight percent polyester staple fibers and 15 to 100 weight percent para-aramid staple fibers, based on the total amount of polyester staple fibers and para-aramid staple fibers, can be formed via conventional processes. Re-purposed para-aramid staple fibers are typically supplied via a bale or a box of the re-purposed staple fibers. The supply can alternatively have the amounts of polyester staple fibers and para-aramid staple fibers previously discussed herein, provided in bales, boxes, or other convenient packaging.

If it is desirable for both the polyester staple fibers and the para-aramid staple fibers to be present in the supply, or a mixture of only re-purposed para-aramid staple fibers and crimped virgin para-aramid staple fibers, preferably the nonwoven felt is made from a supply that is an intimate staple fiber blend of the polyester staple fibers and the para-aramid staple fibers, meaning that the polyester staple fibers and para-aramid staple fibers are uniformly mixed together. Further, if both the polyester staple fibers and the para-aramid staple fibers are present in the supply, or a mixture of only re-purposed para-aramid staple fibers and crimped virgin para-aramid staple fibers, preferably the staple fibers are also disposed in the nonwoven felt as an intimate blend of staple fibers, meaning that the polyester staple fibers and the types of para-aramid staple fibers are uniformly mixed and distributed in the felt. The uniform mixture of the staple fibers in the felt avoids any localized areas having a high concentration of any one type of staple fiber in any one portion of the felt.

In the supply of staple fibers
i) 20 to 100 weight percent of the total amount of para-aramid staple fibers are re-purposed para-aramid staple fibers,
ii) 0 to 80 weight percent of the total amount of para-aramid staple fibers are crimped virgin para-aramid staple fibers having a uniform cut length, and
iii) at least 50 weight percent of the total amount of the combined polyester and para-aramid staple fibers are crimped staple fibers;

The desired intimate staple fiber blend of the polyester staple fibers and the para-aramid staple fibers can be formed by many methods. For example, in one embodiment, clumps of crimped staple fibers obtained from bales or boxes can be fed to a device such as a bale-breaker combined with a picker, or just a picker, that separates the clumps of fibers into individual staple fibers. The staple fibers can then be weighed and blended by any available method, such as air conveying, to form a more uniform mixture. In an alternative embodiment, the staple fibers can be weighed and blended to form a mixture prior to fiber opening in the picker. Other conventional methods for forming a supply of blended staple fibers can be used.

The supply of staple fibers is then converted into a web of staple fibers. In traditional textile processing this is done via a card, which is a device that mechanically disentangles and further mixes the staple fibers and produces a continuous web for subsequent processing. However, other methods of making a web from staple fibers are possible, such as air-laying the fibers onto a moving screen.

The web of staple fibers is then lapped upon itself to make a batt of staple fibers; that is, layers of the web are crosslapped using conventional techniques to form thick fiber batts of sufficient basis weight necessary for further processing. Specifically, the fibrous web can then be sent via conveyor to a device such as a crosslapper to create a crosslapped structure by layering individual webs on top of one another in a zig-zig structure.

The batt of staple fibers is then felted to make a felt having a basis weight of 250 to 600 grams per square meter and a thickness of 2.0 to 5.0 mm. Felting to make a felt structure is achieved by consolidating a batt of staple fibers, typically via either needle punching or hydrolacing. In a preferred embodiment, the fiber batt is preferably consolidated into a felt via a needle punching process such as disclosed in U.S. Pat. Nos. 2,910,763 and 3,684,284. Alternatively, the fiber batt is preferably consolidated into a felt via hydrolacing or spunlacing processes such as disclosed in U.S. Pat. No. 4,556,601 to Kirayoglu.

In a preferred embodiment, the nonwoven felt is made by needle-punching. Using standard carding and cross lapping equipment, the staple fibers are converted into crosslapped batts and are then needle-punched several times on both sides to produce the nonwoven felt. This can be accomplished by first pre-consolidating via needlepunching the batt on one or both sides, followed by additional needlepunching preferably on both sides to further consolidate the batt. Additionally, if desired, a batt of staple fibers suitable for needle punching can be made from two or more lightly consolidated lower basis weight batts. For example, the lower basis weight batts can be lightly tacked or lightly consolidated on a standard needle punch machine and then two or more of these lower basis weight batts can be combined and attached to each other, preferably by needle-punching them together on both sides to produce a nonwoven felt.

In one preferred method, the nonwoven felt is made via a process that consolidates the staple fiber batt through one or multiple punching stages that provide about 50 to 200 needle punch penetrations per square centimeter, the penetrations coming through either the top and/or bottom of the batt, preferably punching both the bottom and top. In one embodiment, the staple fiber batt is consolidated in this manner with about 75 to 150 needle punch penetrations per square centimeter. Useful nonwoven felts have been made using a pre-punching stage or board providing a needle punch density of 50 to 100 penetrations per square centimeter, followed by two main punching stages or boards, each providing a needle punch density of 125 to 150 penetrations per square centimeter.

### Test Methods

The thickness of the nonwoven felt was determined using the standard test method ASTM D1777.

The basis weight of the nonwoven felt was determined using the standard test method ASTM D3776.

The tensile strength and elongation of the nonwoven felt was determined using the standard test method ASTM D4632, using a 4" by 8" (10.16 cm by 20.32 cm) sample size and 2 inch (2.54 cm) clamps, with a distance between clamps of 3 inches (7.62 cm).

### Example 1

A felt was made from a mixture of 70 weight percent polyester (PET) staple fibers and 30 weight percent poly(paraphenylene terephthalamide) (PPD-T) staple fibers. The PET staple fibers were crimped, had a linear density of 6 denier, and a cut length of 3 inches (7.62 cm). The PPD-T staple fibers were 100% re-purposed fibers that were crimped, had a linear density of 1.5 denier (1.67 dtex), and had a precise cut-length of 2 inches (5.08 cm). The mixture of PET staple fibers and PPD-T staple fibers was made in a mixing hopper. The supply mixture of staple fibers contained all crimped staple fibers.

The supply mixture was then carded to form a web, which was then crosslapped to form a batt that was then needled-punched; the batt was first consolidated by needle-punching with a needle density of 75 penetrations per square centimeter and then needle-punched two additional times, each of which had a needle density of 125 penetrations per square centimeter. The final felt had a thickness of 2.8 millimeters and basis weight of 350 grams per square meter. Additional properties of the felt are shown in the **Table.**

### Example 2

Example 1 was repeated with the same types of staple fibers; however, the mixture of staple fibers contained 50 weight percent PET staple fibers and 50 weight percent PPD-T staple fibers. Again, the PPD-T staple fibers were 100% re-purposed fibers that were crimped, had a linear density of 1.5 denier (1.67 dtex), and had a precise cut-length of 2 inches (5.08 cm); and the supply mixture of staple fibers contained all crimped staple fibers. The final felt had a thickness of 2.5 millimeters and basis weight of 280 grams per square meter. Additional properties of the felt are shown in the **Table.**

### Example 3

Example 1 was repeated; however, the PPD-T staple fibers were a mixture of re-purposed, precise cut-length and crimped PPD-T staple fibers and re-purposed variable cut-length staple fibers. Specifically, the mixture of PPD-T staple fibers had 50 weight percent re-purposed PPD-T staple fibers that were crimped, had a linear density of 1.5 denier (1.67 dtex), and had a precise cut-length of 2 inches (5.08 cm); and 50 weight percent re-purposed fibers that were uncrimped, had an estimated linear density of about 1.5 denier (1.67 dtex), and cut lengths that varied between about 0.4 to 2.5 inches (1.02 to 6.35 cm). The supply mixture of PET staple fibers and PPD-T staple fibers was again made by mixing the fibers in a mixing hopper. The final supply mixture of staple fibers had 70 weight percent PET staple fibers, 15 weight percent re-purposed PPD-T staple fibers with a precise cut length that were crimped, and 15 weight percent re-purposed PPD-T staple fibers with a variable cut length that were uncrimped. Therefore, the supply mixture contained 85 weight percent crimped staple fibers. The final felt had a thickness of 2.8 millimeter and basis weight of 350 grams per square meter. Additional properties of the felt are shown in the **Table.**

### Example 4

Example 3 was repeated with the same types and amounts of staple fibers; however, the speed of the crosslapping operation was adjusted to make a slightly heavier batt for a slightly heavier felt. The final felt had a thickness of 3.1 millimeters and basis weight of 450 grams per square meter. Additional properties of the felt are shown in the **Table.**

**Table**

| **Example** | **Tensile Strength at Max Load (psi (kPa))** | | **Elongation at Max Load (%)** | |
|---|---|---|---|---|
| | **CD** | **MD** | **CD** | **MD** |
| 1 | 1102 (7598) | 822 (5667) | 117 | 109 |
| 2 | 1236 (8522) | 741 (5109) | 128 | 103 |
| 3 | 1570 (10825) | 1070 (7377) | 77 | 76 |
| 4 | 2690 (18547) | 1670 (11514) | 88 | 84 |

### Example 5

Example 1 is repeated; however, the 30 weight percent PPD-T staple fibers are all re-purposed PPD-T staple fibers that are uncrimped, have an estimated linear density of about 1.5 denier (1.67 dtex), and have cut lengths that vary between about 0.4 to 2.5 inches (1.02 to 6.35 cm). The mixture of staple fibers contains 70 weight percent crimped staple fibers. A felt similar to Example 1 results.

### Example 6

Example 2 is repeated; however, the 50 weight percent PPD-T staple fibers are all re-purposed PPD-T staple fibers that are uncrimped, have an estimated linear density of about 1.5 denier (1.67 dtex), and have cut lengths that vary between about 0.4 to 2.5 inches (1.02 to 6.35 cm). The mixture of staple fibers contains 50 weight percent crimped staple fibers. A felt similar to Example 2 results.

### Example 7

Example 3 is repeated; however, the 50 weight percent of the re-purposed PPD-T staple fibers that was re-purposed, precise cut-length and crimped PPD-T staple fibers are replaced with crimped virgin PPD-T staple fibers. A felt similar to Example 3 results.

## Claims

1. A pipe liner comprising a nonwoven felt, the nonwoven felt consisting essentially of 0 to 85 weight percent polyester staple fibers and 15 to 100 weight percent para-aramid staple fibers, based on the total amount of polyester staple fibers and para-aramid staple fibers in the nonwoven felt;
the nonwoven felt having a basis weight of 250 to 600 grams per square meter; and a thickness of 2.0 to 5.0 mm measured according to ASTM D1777;
wherein:
i) 20 to 100 weight percent of the total amount of para-aramid staple fibers are re-purposed para-aramid staple fibers,
ii) 0 to 80 weight percent of the total amount of para-aramid staple fibers are crimped virgin para-aramid staple fibers having a uniform cut length, and
iii) at least 50 weight percent of the total amount of the combined polyester and para-aramid staple fibers are crimped staple fibers.

2. The pipe liner of claim 1 wherein the nonwoven felt consists essentially of 0 to 70 weight percent polyester staple fibers and 30 to 100 weight percent para-aramid staple fibers, based on the total amount of polyester staple fibers and para-aramid staple fibers in the nonwoven felt, wherein the nonwoven felt preferably consists essentially of 50 to 70 weight percent polyester staple fibers and 30 to 50 weight percent para-aramid staple fibers, based on the total amount of polyester staple fibers and para-aramid staple fibers in the nonwoven felt.

3. The pipe liner of any one of claims 1 to 2 wherein the nonwoven felt is a needle-punched felt, and/or
wherein 30 to 70 weight percent of the total amount of para-aramid staple fibers are re-purposed fibers

4. The pipe liner of any one of claims 1 to 3 wherein at least some percentage of the re-purposed para-aramid staple fibers in the felt have a variable cut length, wherein preferably 20 to 60 weight percent of the re-purposed para-aramid staple fibers has a variable cut length, and/or
wherein 60 to 75 weight percent of the total amount of the combined polyester and para-aramid staple fibers are crimped staple fibers.

5. The pipe liner of any one of claims 1 to 4 wherein the nonwoven felt has a basis weight of 300 to 500 grams per square meter and a thickness of 2.5 to 4.0 mm measured according to ASTM D1777.

6. The pipe liner of any one of claims 1 to 5 wherein the para-aramid is poly (paraphenylene terephthalamide).

7. A cured-in-place pipe comprising the pipe liner of any one of claims 1 to 6.

8. The cured-in-place pipe of claim 7, wherein only a single-layer of the pipe liner is present, or wherein multiple layers of the pipe liner are present.

9. The cured-in-place pipe of claim 7 wherein one or more layers of the pipe liner is present and layered with one or more layers of one or more felts that do not have re-purposed para-aramid staple fibers.

10. A process for making a nonwoven felt suitable for use in a pipe liner, the process comprising the steps of:
a) forming a supply of staple fibers consisting essentially of 0 to 85 weight percent polyester staple fibers and 15 to 100 weight percent para-aramid staple fibers, based on the total amount of polyester staple fibers and para-aramid staple fibers,
wherein:
i) 20 to 100 weight percent of the total amount of para-aramid staple fibers are re-purposed para-aramid staple fibers,
ii) 0 to 80 weight percent of the total amount of para-aramid staple fibers are crimped virgin para-aramid staple fibers having a uniform cut length, and
iii) at least 50 weight percent of the total amount of the combined polyester and para-aramid staple fibers are crimped staple fibers;
b) converting the supply of staple fibers into a web of staple fibers;
c) lapping the web of staple fibers to make a batt of staple fibers; and
d) felting the batt of staple fibers to make a felt having a basis weight of 250 to 600 grams per square meter and a thickness of 2.0 to 5.0 mm measured according to ASTM D1777.

11. The process for making a nonwoven felt of claim 10 wherein the nonwoven felt consists essentially of 0 to 70 weight percent polyester staple fibers and 30 to 100 weight percent para-aramid staple fibers, based on the total amount of polyester staple fibers and para-aramid staple fibers in the nonwoven felt, wherein preferably the nonwoven felt consists essentially of 50 to 70 weight percent polyester staple fibers and 30 to 50 weight percent para-aramid staple fibers, based on the total amount of polyester staple fibers and para-aramid staple fibers in the nonwoven felt.

12. The process for making a nonwoven felt of any one of claims 10 to 11 wherein the batt of staple fibers is felted using needle-punching and/or
wherein 30 to 70 weight percent of the total amount of para-aramid staple fibers are re-purposed fibers.

13. The process for making a nonwoven felt of any one of claims 10 to 12 wherein at least some percentage of the re-purposed para-aramid staple fibers in the felt have a variable cut length, wherein preferably 20 to 60 weight percent of the re-purposed para-aramid staple fibers has a variable cut length, and/or
wherein 60 to 75 weight percent of the total amount of the combined polyester and para-aramid staple fibers are crimped staple fibers.

14. The process for making a nonwoven felt of any one of claims 10 to 13 wherein the nonwoven felt has a basis weight of 300 to 500 grams per square meter and a thickness of 2.5 to 4.0 mm measured according to ASTM D1777.

15. The process for making a nonwoven felt of any one of claims 10 to 14 wherein the para-aramid is poly (paraphenylene terephthalamide).

## Patentansprüche

1. Rohrauskleidung, die einen Vliesfilz umfasst, wobei der Vliesfilz im Wesentlichen aus 0 bis 85 Gewichtsprozent Polyester-Stapelfasern und 15 bis 100 Gewichtsprozent Para-Aramid-Stapelfasern besteht, basierend auf der Gesamtmenge an Polyester-Stapelfasern und Para-Aramid-Stapelfasern im Vliesfilz;
der Vliesfilz ein Basisgewicht von 250 bis 600 Gramm pro Quadratmeter und eine Dicke von 2,0 bis 5,0 mm, gemessen gemäß ASTM D1777, aufweist;
wobei:
i) 20 bis 100 Gewichtsprozent der Gesamtmenge an Para-Aramid-Stapelfasern wiederverwendete Para-Aramid-Stapelfasern sind,
ii) 0 bis 80 Gewichtsprozent der Gesamtmenge an Para-Aramid-Stapelfasern gekräuselte, frische Para-Aramid-Stapelfasern mit gleichmäßiger Schnittlänge sind und
iii) mindestens 50 Gewichtsprozent der Gesamtmenge der kombinierten Polyester- und Para-Aramid-Stapelfasern gekräuselte Stapelfasern sind.

2. Rohrauskleidung nach Anspruch 1, wobei der Vliesfilz im Wesentlichen aus 0 bis 70 Gewichtsprozent Polyester-Stapelfasern und 30 bis 100 Gewichtsprozent Para-Aramid-Stapelfasern besteht, basierend auf der Gesamtmenge an Polyester-Stapelfasern und Para-Aramid-Stapelfasern im Vliesfilz, wobei der Vliesfilz vorzugsweise im Wesentlichen aus 50 bis 70 Gewichtsprozent Polyester-Stapelfasern und 30 bis 50 Gewichtsprozent Para-Aramid-Stapelfasern besteht, basierend auf der Gesamtmenge an Polyester-Stapelfasern und Para-Aramid-Stapelfasern im Vliesfilz.

3. Rohrauskleidung nach einem der Ansprüche 1 bis 2, wobei der Vliesfilz ein Nadelfilz ist und/oder
wobei 30 bis 70 Gewichtsprozent der Gesamtmenge an Para-Aramid-Stapelfasern wiederverwendete Fasern sind.

4. Rohrauskleidung nach einem der Ansprüche 1 bis 3, wobei mindestens ein gewisser Prozentsatz der wiederverwendeten Para-Aramid-Stapelfasern im Filz eine variable Schnittlänge aufweist, wobei vorzugsweise 20 bis 60 Gewichtsprozent der wiederverwendeten Para-Aramid-Stapelfasern eine variable Schnittlänge aufweisen und/oder
wobei 60 bis 75 Gewichtsprozent der Gesamtmenge der kombinierten Polyester- und Para-Aramid-Stapelfasern gekräuselte Stapelfasern sind.

5. Rohrauskleidung nach einem der Ansprüche 1 bis 4, wobei der Vliesfilz ein Basisgewicht von 300 bis 500 Gramm pro Quadratmeter und eine Dicke von 2,5 bis 4,0 mm, gemessen gemäß ASTM D1777, aufweist.

6. Rohrauskleidung nach einem der Ansprüche 1 bis 5, wobei das Para-Aramid Poly(paraphenylenterephthalamid) ist.

7. Vor Ort ausgehärtetes Rohr, das die Rohrauskleidung nach einem der Ansprüche 1 bis 6 umfasst.

8. Vor Ort ausgehärtetes Rohr nach Anspruch 7, wobei nur eine einzige Schicht der Rohrauskleidung vorhanden ist oder wobei mehrere Schichten der Rohrauskleidung vorhanden sind.

9. Vor Ort ausgehärtetes Rohr nach Anspruch 7, wobei eine oder mehrere Schichten der Rohrauskleidung vorhanden sind und mit einer oder mehreren Schichten aus einem oder mehreren Filzen überzogen sind, die keine wiederverwendeten Para-Aramid-Stapelfasern aufweisen.

10. Prozess zur Herstellung eines Vliesfilzes, der für die Verwendung in einer Rohrauskleidung geeignet ist, wobei der Prozess die folgenden Schritte umfasst:
a) Bilden eines Stapelfaservorrats, der im Wesentlichen aus 0 bis 85 Gewichtsprozent Polyester-Stapelfasern und 15 bis 100 Gewichtsprozent Para-Aramid-Stapelfasern besteht, basierend auf der Gesamtmenge an Polyester-Stapelfasern und Para-Aramid-Stapelfasern,
wobei:
i) 20 bis 100 Gewichtsprozent der Gesamtmenge an Para-Aramid-Stapelfasern wiederverwendete Para-Aramid-Stapelfasern sind,
ii) 0 bis 80 Gewichtsprozent der Gesamtmenge an Para-Aramid-Stapelfasern gekräuselte, frische Para-Aramid-Stapelfasern mit gleichmäßiger Schnittlänge sind und
iii) mindestens 50 Gewichtsprozent der Gesamtmenge der kombinierten Polyester- und Para-Aramid-Stapelfasern gekräuselte Stapelfasern sind;
b) Umwandeln des Stapelfaservorrats in eine Stapelfaserbahn;
c) Läppen der Stapelfaserbahn zur Herstellung einer Stapelfasermatte; und
d) Filzen der Stapelfasermatte, um einen Filz mit einem Basisgewicht von 250 bis 600 Gramm pro Quadratmeter und einer Dicke von 2,0 bis 5,0 mm, gemessen gemäß ASTM D1777, herzustellen.

11. Prozess zur Herstellung eines Vliesfilzes nach Anspruch 10, wobei das Vliesfilz im Wesentlichen aus 0 bis 70 Gewichtsprozent Polyester-Stapelfasern und 30 bis 100 Gewichtsprozent Para-Aramid-Stapelfasern besteht, basierend auf der Gesamtmenge an Polyester-Stapelfasern und Para-Aramid-Stapelfasern im Vliesfilz, wobei das Vliesfilz vorzugsweise im Wesentlichen aus 50 bis 70 Gewichtsprozent Polyester-Stapelfasern und 30 bis 50 Gewichtsprozent Para-Aramid-Stapelfasern besteht, basierend auf der Gesamtmenge an Polyester-Stapelfasern und Para-Aramid-Stapelfasern im Vliesfilz.

12. Prozess zur Herstellung eines Vlieses nach einem der Ansprüche 10 bis 11, wobei die Stapelfasermatte mittels Nadelfilzen verfilzt wird und/oder
wobei 30 bis 70 Gewichtsprozent der Gesamtmenge an Para-Aramid-Stapelfasern wiederverwendete Fasern sind.

13. Prozess zur Herstellung eines Vliesfilzes nach einem der Ansprüche 10 bis 12, wobei mindestens ein gewisser Prozentsatz der wiederverwendeten Para-Aramid-Stapelfasern im Filz eine variable Schnittlänge aufweist, wobei vorzugsweise 20 bis 60 Gewichtsprozent der wiederverwendeten Para-Aramid-Stapelfasern eine variable Schnittlänge aufweisen und/oder
wobei 60 bis 75 Gewichtsprozent der Gesamtmenge der kombinierten Polyester- und Para-Aramid-Stapelfasern gekräuselte Stapelfasern sind.

14. Prozess zur Herstellung eines Vliesfilzes nach einem der Ansprüche 10 bis 13, wobei das Vliesfilz ein Basisgewicht von 300 bis 500 Gramm pro Quadratmeter und eine Dicke von 2,5 bis 4,0 mm, gemessen gemäß ASTM D1777, aufweist.

15. Prozess zur Herstellung eines Vliesfilzes nach einem der Ansprüche 10 bis 14, wobei das Para-Aramid Poly(paraphenylenterephthalamid) ist.

## Revendications

1. Revêtement de tuyau comprenant un feutre non tissé, le feutre non tissé consistant essentiellement en 0 à 85 pour cent en poids de fibres discontinues de polyester et 15 à 100 pour cent en poids de fibres discontinues de para-aramide, sur la base de la quantité totale de fibres discontinues de polyester et de fibres discontinues de para-aramide dans le feutre non tissé ;
le feutre non tissé présentant un poids de base de 250 à 600 grammes par mètre carré ; et une épaisseur de 2,0 à 5,0 mm mesurée selon la norme ASTM D1777 ;
dans lequel :
i) 20 à 100 pour cent en poids de la quantité totale de fibres discontinues de para-aramide sont des fibres discontinues de para-aramide réutilisées,
ii) 0 à 80 pour cent en poids de la quantité totale de fibres discontinues de para-aramide sont des fibres discontinues de para-aramide vierges frisées présentant une longueur de coupe uniforme, et
iii) au moins 50 pour cent en poids de la quantité totale des fibres discontinues de polyester et de para-aramide combinées sont des fibres discontinues frisées.

2. Revêtement de tuyau selon la revendication 1, dans lequel le feutre non tissé consiste essentiellement en 0 à 70 pour cent en poids de fibres discontinues de polyester et 30 à 100 pour cent en poids de fibres discontinues de para-aramide, sur la base de la quantité totale de fibres discontinues de polyester et de fibres discontinues de para-aramide dans le feutre non tissé, dans lequel le feutre non tissé consiste de préférence essentiellement en 50 à 70 pour cent en poids de fibres discontinues de polyester et 30 à 50 pour cent en poids de fibres discontinues de para-aramide, sur la base de la quantité totale de fibres discontinues de polyester et de fibres discontinues de para-aramide dans le feutre non tissé.

3. Revêtement de tuyau selon l'une quelconque des revendications 1 à 2, dans lequel le feutre non tissé est un feutre aiguilleté, et/ou
dans lequel 30 à 70 pour cent en poids de la quantité totale de fibres discontinues de para-aramide sont des fibres réutilisées.

4. Revêtement de tuyau selon l'une quelconque des revendications 1 à 3, dans lequel au moins un certain pourcentage des fibres discontinues de para-aramide réutilisées dans le feutre présentent une longueur de coupe variable, dans lequel de préférence 20 à 60 pour cent en poids des fibres discontinues de para-aramide réutilisées présentent une longueur de coupe variable, et/ou
dans lequel 60 à 75 pour cent en poids de la quantité totale des fibres discontinues de polyester et de para-aramide combinées sont des fibres discontinues frisées.

5. Revêtement de tuyau selon l'une quelconque des revendications 1 à 4, dans lequel le feutre non tissé présente un poids de base de 300 à 500 grammes par mètre carré et une épaisseur de 2,5 à 4,0 mm mesurée selon la norme ASTM D1777.

6. Revêtement de tuyau selon l'une quelconque des revendications 1 à 5, dans lequel le para-aramide est du poly(paraphénylène téréphtalamide).

7. Tuyau durci en place comprenant le revêtement de tuyau selon l'une quelconque des revendications 1 à 6.

8. Tuyau durci en place selon la revendication 7, dans lequel une seule couche de revêtement de tuyau est présente, ou dans lequel plusieurs couches de revêtement de tuyau sont présentes.

9. Tuyau durci en place selon la revendication 7, dans lequel une ou plusieurs couches de revêtement de tuyau sont présentes et recouvertes d'une ou plusieurs couches d'un ou plusieurs feutres qui ne présentent pas de fibres discontinues de para-aramide réutilisées.

10. Processus de fabrication d'un feutre non tissé adapté à une utilisation dans un revêtement de tuyau, le processus comprenant les étapes consistant à :
a) former un approvisionnement de fibres discontinues consistant essentiellement en 0 à 85 pour cent en poids de fibres discontinues de polyester et 15 à 100 pour cent en poids de fibres discontinues de para-aramide, sur la base de la quantité totale de fibres discontinues de polyester et de fibres discontinues de para-aramide,
dans lequel :
i) 20 à 100 pour cent en poids de la quantité totale de fibres discontinues de para-aramide sont des fibres discontinues de para-aramide réutilisées,
ii) 0 à 80 pour cent en poids de la quantité totale de fibres discontinues de para-aramide sont des fibres discontinues de para-aramide vierges frisées présentant une longueur de coupe uniforme, et
iii) au moins 50 pour cent en poids de la quantité totale des fibres discontinues de polyester et de para-aramide combinées sont des fibres discontinues frisées ;
b) convertir l'approvisionnement de fibres discontinues en une bande de fibres discontinues ;
c) chevaucher la bande de fibres discontinues pour fabriquer une nappe de fibres discontinues ; et
d) feutrer la nappe de fibres discontinues pour fabriquer un feutre présentant un poids de base de 250 à 600 grammes par mètre carré et une épaisseur de 2,0 à 5,0 mm mesurée selon la norme ASTM D1777.

11. Processus de fabrication d'un feutre non tissé selon la revendication 10, dans lequel le feutre non tissé consiste essentiellement en 0 à 70 pour cent en poids de fibres discontinues de polyester et 30 à 100 pour cent en poids de fibres discontinues de para-aramide, sur la base de la quantité totale de fibres discontinues de polyester et de fibres discontinues de para-aramide dans le feutre non tissé, dans lequel de préférence le feutre non tissé consiste essentiellement en 50 à 70 pour cent en poids de fibres discontinues de polyester et 30 à 50 pour cent en poids de fibres discontinues de para-aramide, sur la base de la quantité totale de fibres discontinues de polyester et de fibres discontinues de para-aramide dans le feutre non tissé.

12. Processus de fabrication d'un feutre non tissé selon l'une quelconque des revendications 10 à 11, dans lequel la nappe de fibres discontinues est feutrée par aiguilletage, et/ou
dans lequel 30 à 70 pour cent en poids de la quantité totale de fibres discontinues de para-aramide sont des fibres réutilisées.

13. Processus de fabrication d'un feutre non tissé selon l'une quelconque des revendications 10 à 12, dans lequel au moins un certain pourcentage des fibres discontinues de para-aramide réutilisées dans le feutre présentent une longueur de coupe variable, dans lequel de préférence 20 à 60 pour cent en poids des fibres discontinues de para-aramide réutilisées présentent une longueur de coupe variable, et/ou
dans lequel 60 à 75 pour cent en poids de la quantité totale des fibres discontinues de polyester et de para-aramide combinées sont des fibres discontinues frisées.

14. Processus de fabrication d'un feutre non tissé selon l'une quelconque des revendications 10 à 13, dans lequel le feutre non tissé présente un poids de base de 300 à 500 grammes par mètre carré et une épaisseur de 2,5 à 4,0 mm mesurée selon la norme ASTM D1777.

15. Processus de fabrication d'un feutre non tissé selon l'une quelconque des revendications 10 à 14, dans lequel le para-aramide est du poly(paraphénylène téréphtalamide).
